# FASCICULE DE BREVET EUROPEEN

(11) **EP 0 701 666 B1**
(45) Date de publication et mention de la délivrance du brevet: **25.08.1999**
(21) Numéro de dépôt: 95917389.9
(22) Date de dépôt: 13.04.1995
(51) Int. Cl.: F16F 15/12

(54) **VOLANT AMORTISSEUR, NOTAMMENT POUR VEHICULE AUTOMOBILE**
DÄMPFENDES SCHWUNGRAD, INSBESONDERE FÜR KRAFTFAHRZEUGE
FLYWHEEL, IN PARTICULAR FOR MOTOR VEHICLES

(30) Priorité: 14.04.1994 FR 9404437
(43) Date de publication de la demande: 20.03.1996
(73) Titulaire: VALEO, 75017 Paris (FR)
(72) Inventeur: MOKDAD, Ayman, F-93400 Saint-Ouen (FR)
(74) Mandataire: Gamonal, Didier
(86) Numéro de dépôt international: FR9500480
(87) Numéro de publication internationale: WO9528578

(56) Documents cités:
- WO-A-94/27062
- DE-A- 1 921 972
- DE-A- 3 926 384

## Description

La présente invention concerne les volants amortisseurs, notamment pour véhicule automobile, du genre comportant deux masses coaxiales montées mobiles l'une par rapport à l'autre à l'encontre d'un dispositif élastique d'amortissement comportant au moins un organe élastique intervenant globalement radialement entre les deux masses et monté à articulation sur l'une et l'autre de celles-ci.

Un tel volant amortisseur, appelé aussi double volant amortisseur, est décrit par exemple dans le document WO-A-9517618 déposé avant et publié après la date de priorité de la demande présente ainsi que dans le document WO 94 27062.

Dans le document WO-A-9517618, dans une forme de réalisation, l'organe élastique est monté à articulation sur les deux masses par l'intermédiaire de tirants montés tête-bêche. Chaque tirant présente une base et des dents se raccordant à ladite base. Les dents des tirants sont montées à l'intérieur du tube-guide et délimitent des logements pour montage d'organes élastiques.

Cette disposition donne satisfaction, néanmoins dans certains cas, il peut être souhaitable d'augmenter la rigidité des pièces servant au montage des organes élastiques, ainsi que d'améliorer leur guidage.

La présente invention a pour objet de répondre, de manière simple et économique, à ces souhaits.

Suivant l'invention ce problème est résolu par les caractéristiques de la revendication 1.

Grâce à l'invention il est créée une cassette articulée servant au logement et au guidage des organes élastiques. Cette cassette articulée est plus rigide que les tirants de l'art antérieur, du fait notamment que les pièces de guidage encadrent le voile, en étant fixée entre elles.

En outre les premiers et seconds logements permettent un bon guidage de ou des organes élastiques.

Grâce à la disposition selon l'invention il devient possible, dans le cas où les organes élastiques consistent en des ressorts à boudin, de monter ceux-ci de manière concentrique.

Il devient possible de monter un ou plusieurs organes élastiques selon les applications.

Ces organes élastiques peuvent même intervenir de manière différée. Pour ce faire, certains organes élastiques peuvent être montés par exemple sans jeu dans les seconds logements des pièces de guidage et avec jeu dans le premier logement du voile. Ainsi les logements du voile peuvent avoir des tailles différentes.

Bien entendu l'inverse est possible, certains ressorts étant montés sans jeu dans les premiers logements et avec jeu dans les seconds logements.

Tout cela dépend des applications.

Dans une variante un dispositif de frottement peut être monté parallèlement aux logements et à l'organe élastique.

Ainsi grâce à l'invention il est possible aisément d'intégrer un dispositif de frottement à l'intérieur de ladite cassette et ce à la faveur du voile et des pièces de guidage.

Dans une forme de réalisation les premiers et seconds logements consistent en des fenêtres d'orientation globalement radiale.

En variante les premiers logements peuvent consister en des échancrures globalement d'orientation radiale ouverte radialement du côté opposé à la première protubérance.

Les seconds logements peuvent consister en des emboutis.

Ainsi, grâce à l'invention, on peut obtenir une multitude de solutions.

Avantageusement les pièces de guidage sont fixées latéralement l'une à l'autre à la faveur de bords latéraux qu'elles présentent à cet effet.

Ainsi il est possible d'implanter des patins de guidage entre lesdits bords latéraux et la tranche en regard du voile.

Ainsi ces patins permettent d'éviter tout coincement du mouvement relatif entre le voile et les pièces de guidage.

Dans une forme de réalisation, les pièces de guidage présentent chacune au niveau de la première protubérance un second évidement pour le passage des premiers moyens d'articulation, tandis que le voile présente au niveau des secondes protubérances un premier évidement pour passage des seconds moyens d'articulation.

Grâce à cette disposition les organes élastiques peuvent, pour un encombrement donné, avoir une longueur maximale.

Dans une forme de réalisation les moyens d'articulation sont radialement alignés.

Dans une autre forme de réalisation les moyens d'articulation sont décalés radialement et circonférentiellement.

Ainsi dans tous les cas les organes élastiques s'étendent globalement radialement.

Dans la première forme de réalisation, ces organes travaillent en compression lors du mouvement relatif entre le voile et les pièces de guidage, tandis que dans la seconde forme de réalisation ils travaillent en traction-compression lors du mouvement relatif entre le voile et les pièces de guidage.

La description qui va suivre illustre l'invention en regard des dessins annexés dans lesquels :
- la figure 1 est une vue en coupe axiale d'un embrayage à friction équipé d'un volant amortisseur selon l'invention et ce selon la ligne 1-1 de la figure 2 ;
- la figure 2 est une vue de face de l'embrayage à friction sans ses plateaux de réaction et de pression et son disque de friction avec arrachement local ;
- la figure 3 est une vue en coupe selon la ligne 3-3 de la figure 2 ;
- la figure 4 est une vue à plus grande échelle de la partie basse de la figure 1 ;
- la figure 5 est une vue analogue à la figure 1 pour un deuxième exemple de réalisation ;
- la figure 6 est une vue partielle selon la flèche 6 de la figure 5, le plateau de réaction 21 ayant été oté ;
- la figure 7 est une vue à plus grande échelle de la partie basse de la figure 5 ;
- la figure 8 est une vue en coupe axiale pour un troisième exemple de réalisation ;
- la figure 9 est une vue de face d'une cassette articulée pour un autre exemple de réalisation ;
- la figure 10 est une vue en coupe selon la ligne 10-10 de la figure 9 ;
- la figure 11 est une demi-vue en coupe analogue à la figure 10 pour un autre exemple de réalisation ;
- la figure 12 est une vue en coupe partielle pour une autre variante des moyens d'articulation ;
- la figure 13 est une vue analogue à la figure 12 pour encore un autre exemple de réalisation ;
- la figure 14 est une vue partielle pour encore une autre variante des moyens d'articulation ;
- la figure 15 est une demi-vue analogue à la figure 5 avec le reste de l'embrayage ;
- la figure 16 est une vue analogue à la figure 3 pour un exemple de réalisation non conforme à l'invention;
- la figure 17 est une vue en élévation d'un voile analogue à la figure 3 ;
- la figure 18 est une vue analogue à la figure 16 pour encore un autre exemple de réalisation ;
- la figure 19 est une vue schématique du voile en élévation de la figure 18 avec l'une de ses pièces d'application associées ;
- la figure 20 est une vue en perspective sans la seconde masse d'un volant amortisseur pour encore un autre exemple de réalisation, sans les moyens d'articulation ;
- la figure 21 est une vue en perspective d'une cassette de la figure 20 ;
- la figure 22 est une vue partielle montrant les seconds moyens d'articulation pour encore un autre exemple de réalisation.

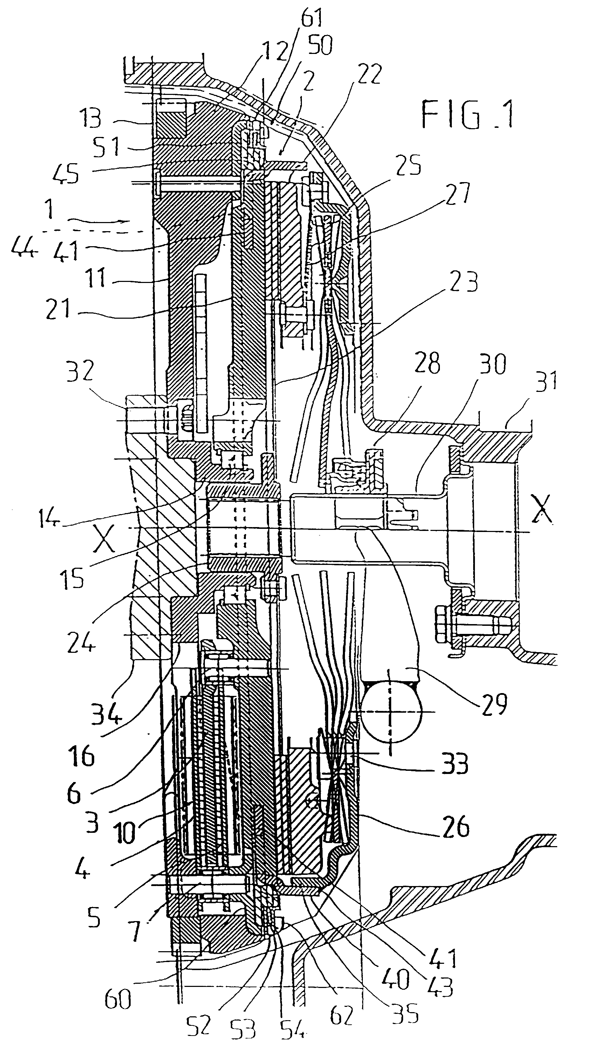

Dans les figures 1 à 3 est illustré un dispositif amortisseur de torsion comportant deux parties coaxiales 1,2 montées mobiles l'une par rapport à l'autre à l'encontre de moyens élastiques 8 appartenant à un dispositif élastique d'amortissement.

Ce dispositif appartient à un volant amortisseur pour véhicule automobile.

La première partie 1 consiste en un plateau 11 et la seconde partie 2 consiste également en un plateau 21 s'étendant parallèlement au plateau 11. Les plateaux 11 et 21 sont en matière moulable, usuellement en fonte, pour augmenter leur inertie. En variante ils peuvent être à base d'aluminium, le choix de la matière dépendant des applications.

En règle générale, de manière connue en soi, le métal en fusion est versé dans un moule.

Les deux parties 1,2 consistent donc en des masses coaxiales tournantes l'une par rapport à l'autre autour de l'axe de symétrie axial X-X de l'embrayage.

La seconde masse 2 est montée à rotation sur un moyeu tubulaire 14 porté par la première masse 11. Ici le moyeu 14 est d'un seul tenant avec le plateau 11, en variante il peut être rapporté sur celui-ci, et un palier 15, ici un roulement à billes en variante un palier lisse, est interposé entre la périphérie externe du moyeu 14 et la périphérie interne du plateau 21.

La seconde masse 2, montée tournante sur la masse 1 par l'intermédiaire du palier 15, constitue le plateau de réaction d'un embrayage à friction comportant, de manière connue en soi, un plateau de pression 22, un diaphragme 25 et un couvercle 26.

Par rapport à une solution classique avec un volant moteur formant le plateau de réaction de l'embrayage, on divise ici le volant en deux parties comme explicité ci-après.

Le plateau de réaction 21 en matière moulable comporte un insert de fixation 40,41 ancré dans la masse dudit plateau 21 en étant noyé dans celui-ci. Ledit insert 40,41 présente en saillie, au voisinage de la périphérie externe du plateau de réaction 21, une zone de fixation 40 pour fixation du couvercle 26 de l'embrayage à friction et formation d'un dispositif de frottement suivant une caractéristique de l'invention.

Ici le plateau de pression 22, usuellement en fonte, est lié en rotation au couvercle 26 avec mobilité axiale, de manière connue en soi, par l'intermédiaire de languettes élastiques inclinées 27 fixées chacune à l'une de leur extrémité au couvercle 26 et à l'autre de leur extrémité à une patte du plateau de pression 22.

La fixation est réalisée ici par rivetage.

Le diaphragme 25 est monté de manière basculante sur le couvercle 26, ici par l'intermédiaire de colonnettes 33, dont l'une est visible dans la partie basse de la figure 1. Cette colonnette présente une tête pour appui du diaphragme en regard d'un embouti formé dans le fond du couvercle.

Pour plus de précisions on se reportera au document FR-A-1 524 350 (US-A-3,499,512).

En variante on peut utiliser une articulation avec deux joncs portés par les colonnettes ou des dispositions avec des rondelles portées par des pattes issues d'un seul tenant du couvercle par pliage et découpe.

Le diaphragme 25 prend appui sur le fond du couvercle 26 pour solliciter le plateau de pression 22 en direction du plateau de réaction 21. L'embrayage à friction comporte également un disque de friction 23, qui est relié à un moyeu central 24 calé en rotation sur l'arbre d'entrée de la boîte vitesses (non visible) par un montage à cannelures.

Pour mémoire on rappellera que l'ensemble des pièces 26,25,24,27 forme un mécanisme d'embrayage unitaire fixé par son couvercle 26, de forme creuse, sur le plateau de réaction 21 grâce aux inserts 40,41 selon l'invention.

Normalement les garnitures de frottement, que présente le disque 23 à sa périphérie externe, sont serrées sous l'action du diaphragme entre les plateaux 21,22 en sorte que l'embrayage est normalement engagé.

Pour débrayer, l'embrayage étant ici du type poussé, il faut agir en poussant sur les extrémités des doigts du diaphragme 25 à l'aide d'une butée de débrayage 28 pour désengager l'embrayage.

Pour ce faire la butée 28 est montée mobile axialement le long d'un tube-guide 30 solidaire de la boîte de vitesses 31 et traversé par l'arbre d'entrée de celle-ci.

Cette butée 28 est commandée par une fourchette de débrayage 29 permettant son déplacement axial vers la gauche de la figure 1 entraînant ainsi un basculement du diaphragme dont plusieurs positions sont représentées à la figure 1.

La première masse tournante 11 est prévue pour être reliée, ici par des vis 32, par sa périphérie interne à un arbre menant, ici au vilebrequin 34 du moteur à combustion interne du véhicule automobile, tandis que la seconde masse tournante 2 est liée en rotation par l'intermédiaire du mécanisme d'embrayage 22,25,26,27 et du disque 23 à un arbre mené, ici l'arbre d'entrée de la boîte de vitesses du véhicule.

La première masse 1, formant plateau, est constituée dans l'essentiel par une partie centrale 11, d'orientation transversale, en forme de plaque ou de flasque, qui se prolonge d'un seul tenant à sa périphérie externe par une jupe cylindrique d'orientation axiale 12.

Cette masse 1 porte à sa périphérie externe une couronne de démarrage 13 prévue pour être entraînée par le pignon d'un démarreur (non représenté).

La partie interne de la masse 1 est dotée d'une pluralité de trous pour passage des vis de fixation 32 de la masse 1 au vilebrequin 34.

On notera que le plateau de réaction 21 présente des trous en correspondance permettant le passage d'un outil pour le vissage des vis 32 et que le roulement 15 s'étend en-dessous des vis 32 et desdits trous en étant de taille réduite.

Ici l'insert 40,41 est métallique en étant en tôle emboutie.

Cet insert comporte une partie transversale 41 noyée et donc enracinée de manière ferme dans la partie principale transversale du plateau de réaction 21.

Cette partie 41 est dotée d'une pluralité de trous 44 pour parfaire l'enracinement.

A sa périphérie externe cette partie transversale 41 est prolongée, en direction du fond du couvercle 26, par une partie cylindrique 40 d'orientation axiale, éventuellement fractionnée en pattes, qui forme la zone de fixation. La partie 40 s'étend en saillie axiale par rapport à la face de friction du plateau de réaction en s'étendant radialement au-delà de la périphérie externe du plateau 21 (au voisinage de celle-ci) et donc à distance des garnitures de frottement du disque 23 et du plateau de pression 22 qu'elles entourent. La face de friction, qu'offre le plateau 21 aux garnitures de frottement du disque 23, peut donc s'étendre jusqu'à la tranche externe du plateau 21. Le couvercle 26, ici en tôle emboutie, présente à sa périphérie externe un rebord d'orientation axiale 35 ici fractionné.

Ce rebord 35 est cylindrique et est propre à coopérer à glissement (de manière télescopique) avec la périphérie interne de la partie 40 formant centreur.

Le rebord 35, en contact intime avec la partie 40, est ainsi interposé entre la partie 40 et la périphérie externe du plateau de pression 22.

Il est donc possible d'engager plus ou moins le couvercle 26 dans la partie 40.
Bien entendu on peut inverser les structures, le rebord entourant alors la partie 40 en coopérant avec la périphérie externe de celle-ci. Dans tous les cas, la partie 40 forme un organe de guidage et de centrage pour le rebord 35 et donc pour le couvercle 26.

Ainsi on peut contrôler de manière précise l'inclinaison et/ou la charge du diaphragme 25, et s'affranchir des tolérances de fabrication, et ce par rapport à une référence en l'occurrence le vilebrequin 34 du moteur du véhicule.

Dès que le diaphragme a atteint l'inclinaison, et/ou la charge souhaitée, on procède alors à une fixation du couvercle ici sur l'extrémité libre de la zone de fixation 40 de l'insert, ici par soudage, avec formation d'un cordon 43.

Lorsque le rebord 35 entoure la partie 40, le soudage est réalisé au niveau de l'extrémité libre du rebord.

Dans les figures illustrées les moyens élastiques du dispositif élastique d'amortissement comportent au moins un organe élastique 8 et interviennent globalement radialement entre les plateaux 11 et 21 et donc entre les deux masses 1,2.

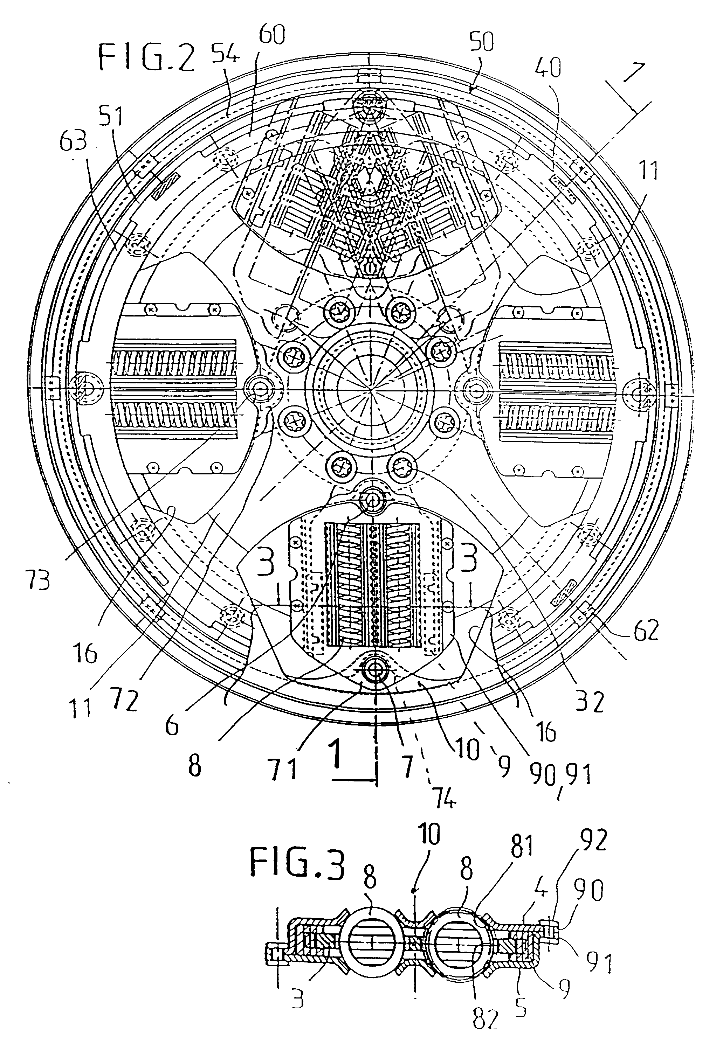

Suivant un mode de réalisation de l'invention des organes élastiques sont montés dans au moins une cassette 10 articulée (figures 2 et 3) comportant, d'une part, un voile 3 doté de premiers logements 82 pour montage des organes élastiques 8 et, d'autre part, deux pièces de guidage 4,5 disposées de part et d'autre dudit voile et présentant chacune, en regard du premier logement 82, un second logement 81 pour montage desdits organes élastiques 8, consistant ici en deux ressorts à boudin, éventuellement montés par paire dans les logements 81,82.

Dans les figures 1 à 11 deux logements 82 parallèles entre eux sont prévus. Ainsi le volant amortisseur comporte au moins deux organes élastiques 8 montés parallèlement l'un à l'autre dans la cassette, ledit voile 3 présentant deux premiers logements parallèles 82, tandis que les pièces de guidage 4,5 présentent, en regard de chacun des premiers logements, une paire de seconds logements parallèles 81. Bien entendu on peut prévoir un seul ressort par cassette et donc une seule paire de logements 81 et un seul logement associé 82.

En variante on peut prévoir un nombre plus élevé de logements 81,82 et donc de ressorts 8 par cassette, tout cela dépendant des applications.

Les pièces de guidage 4,5 sont fixées latéralement (dans la direction transversale) l'une à l'autre. Le voile 3 et les pièces de guidage 4,5 sont montés tête-bêche, ledit voile présentant selon l'invention à l'une de ses périphéries externe et interne une première probutérance 72 pour montage de premiers moyens d'articulation 6 sur une première desdites masses 11,12, tandis que les pièces de guidage 4,5 présentent à l'une de leur périphérie externe et interne une seconde protubérance 71, en regard l'une de l'autre, pour montage de seconds moyens d'articulation 7, sur l'autre desdites masses.
Lesdites secondes 71 et première protubérances 72 sont décalées radialement l'une par rapport à l'autre et il en est donc de même des moyens d'articulation 6,7.
Ici les premiers 82 et seconds logements 81 consistent en des fenêtres d'orientation radiale, les seconds logements 81 présentant des lèvres.

En variante le premier logement peut consister en une échancrure d'orientation radiale ouverte radialement du côté opposé à la première protubérance.

En variante les seconds logements 81 peuvent consister en des emboutis. Avantageusement les premiers logements sont fermés.

Quoi qu'il en soit, les pièces de guidage 4,5 présentent à leur périphérie externe des rebords 90,91 pour leur fixation mutuelle ici à l'aide de rivets 92.

Ces rebords comportent des parties perpendiculaires au voile 3 et parallèles à celui-ci. Les rebords 90,91 sont donc en contact l'un avec l'autre.

Ces pièces de guidage 4,5 sont donc fixées latéralement l'une à l'autre par rivetage.

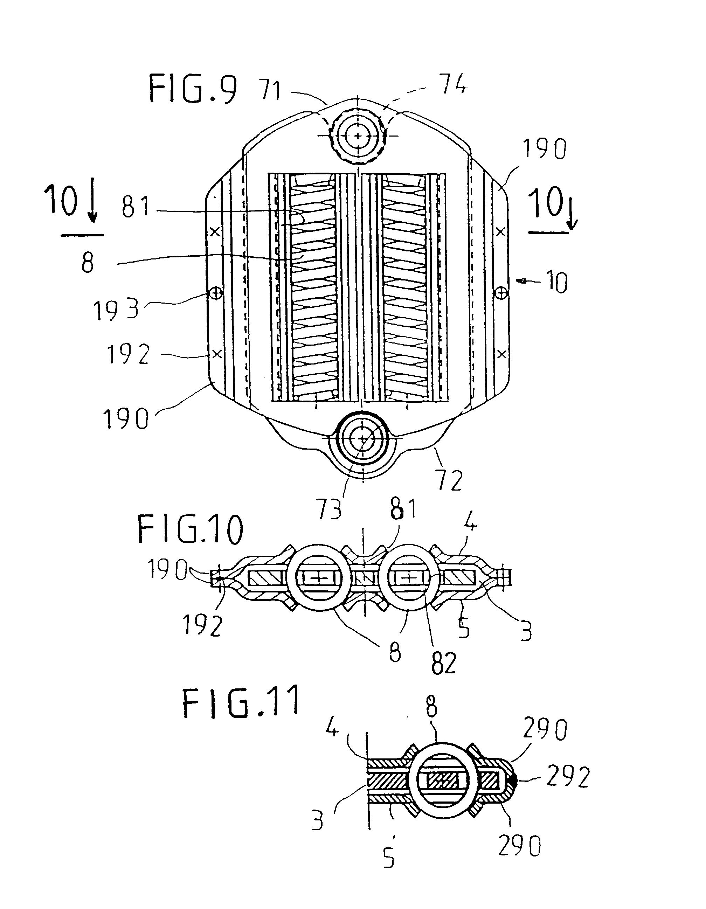

En variante elles peuvent être fixées l'une à l'autre à la faveur de leurs rebords par soudage (figures 9 à 11) ou agrafage. Toutes les combinaisons sont possibles par exemple les pièces de guidage sont fixées l'une à l'autre latéralement par rivetage et soudage.

Ici deux ressorts 8 sont montés parallèlement l'un à l'autre à l'intérieur de ladite cassette et le voile 3 est monté à articulation à sa périphérie interne sur le plateau 21, tandis que les pièces de guidage 4,5 sont montées à articulation à leur périphérie externe sur le plateau 11. Les pièces 4,5 présentent chacune au niveau de la première protubérance 72 un évidement 73, ici semi-circulaire, pour passage d'un axe 6, décrit ci-après, ce qui permet d'allonger les ressorts 8.

Il en est de même du voile 3, qui présente au niveau des secondes protubérances 71 un évidement 74, ici semi-circulaire, pour passage d'un axe 7 décrit ci-après.

Les ressorts 8 ont donc une longueur maximale.

Plus précisément le voile 3 est monté à articulation par les premiers moyens d'articulation 6 sur le plateau 21 (à la périphérie interne de celui-ci) à l'aide d'un axe 6 à tête épaulée fixé, ici par emmanchement à force, sur le plateau 21 et entouré par un palier à aiguilles 171 interposé entre ledit axe et une douille (ou manchon) 170 fixée sur le voile 3.

En variante on peut utiliser un palier lisse.

Cette douille 170 s'étend axialement entre les plateaux 11 et 21 en étant fixée ici par soudage sur le voile 3.

A leur périphérie externe les pièces 4,5 sont montées à articulation sur le plateau 11 par les seconds moyens d'articulation 7 à l'aide d'un axe 7 emmanché à force dans le plateau 11 et dans une pièce 60 et ce à la périphérie externe du plateau 21.

L'axe 7, comme l'axe 6, est entouré par un roulement à aiguilles interposé entre ledit axe et un manchon solidaire des pièces de guidage 3,4, ici par soudage.

Le manchon et le roulement à aiguilles sont interposés axialement entre le plateau 11 et la pièce 60 présentant une cheminée pour réception de l'axe 7.

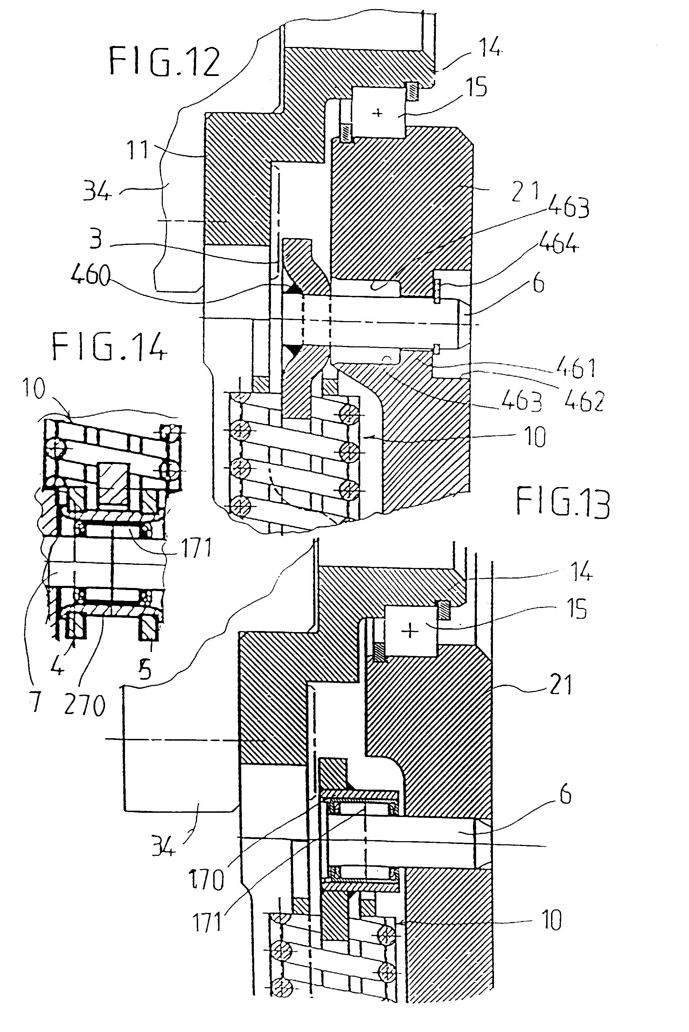

En variante (figure 14) le manchon 270 peut être rapporté par sertissage sur les pièces 4,5. Pour ce faire le manchon présente une partie centrale de plus grand diamètre s'étendant entre les deux pièces 4,5 et offrant à celles-ci un épaulement. Les extrémités du manchon sont rabattues pour sa fixation par sertissage aux pièces 4,5. Ce manchon 270 est monté sur le roulement à aiguilles 171.

Le plateau 11 est évidé en 16 en regard de chaque cassette 10. Les évidements favorisent la ventilation du volant amortisseur, ainsi que la réduction de l'encombrement axial.

Ici le dispositif élastique d'amortissement comporte quatre cassettes articulées 10 et quatre axes 6,7, régulièrement répartis sont prévus comme illustré à la figure 2. Bien entendu ce nombre dépend des applications.

La pièce 60, dont la partie principale est d'orientation transversale, est fixée ici par rivetage à la périphérie externe du plateau 11, plus précisément sur la partie 12 de celui-ci. Cette pièce 60 est d'orientation transversale.

Cette pièce 60, ici en tôle, permet donc de rigidifier le plateau 11 ajouré par les ouvertures 16. Par commodité elle sera dénommée pièce de rigidification.

Elle délimite également avec le plateau 11 une chape pour le montage des axes 7.

La pièce 60 présente à sa périphérie externe, dans une première forme de réalisation, un rebord d'orientation axiale avec des échancrures 61 formant des mortaises et des pattes 62 à son extrémité libre. Les pattes 62 sont rabattues radialement vers l'axe de l'ensemble.

La pièce 60 s'étend à proximité de la première masse et a donc une forme de peigne avant pliage des pattes 62.

Entre la périphérie externe de la partie transversale de la pièce 60 et les pattes 62, on trouve successivement axialement une rondelle de frottement 51, une rondelle d'application 52, une rondelle élastique à action axiale 53, ici une rondelle Belleville en variante un diaphragme ou une rondelle ondulée, et enfin une pièce d'appui 54 au contact avec les pattes 62.

La rondelle d'application 52 présente à sa périphérie externe des pattes, formant des tenons, engagées dans les échancrures 61 de la pièce 60. La rondelle 52 est ainsi liée en rotation, éventuellement avec jeu, avec la pièce 60 par une liaison du type tenons-mortaises.

La pièce 51 est en matériau de frottement avantageusement en matière moulable telle que de la matière plastique et a globalement en section la forme d'un L inversé.

Localement à sa périphérie interne la pièce 51 présente des bossages 63 engagés, avec ou sans jeu circonférentiel, dans des emboutis 45 locaux pratiqués dans la zone de raccordement de la zone de fixation 40 avec la zone 41 d'enracinement de l'insert de fixation 40,41.

Les emboutis 45 sont dirigés vers l'axe de l'ensemble en étant au contact de la périphérie externe du plateau de réaction 2. Pour cette raison les bossages 63 sont chanfreinés.

Ainsi, grâce à la pièce 60 et à l'insert de fixation 40,41, il est créé un dispositif d'hystérésis 50 intervenant entre les pièces 40,41 - 60, ledit dispositif comprenant, d'une part, les rondelles 52,53,54 calées en rotation par l'intermédiaire de la pièce 52 sur la pièce 60, et d'autre part, la pièce de frottement 51 calée en rotation, éventuellement à jeu, sur la pièce 40 et donc sur le plateau 21. Le dispositif 50 forme donc des moyens de frottement intervenant entre les deux masses 1,2 à la faveur, de la pièce 60 et du plateau de réaction 21.

Ce dispositif intervient à la périphérie externe des deux masses 1,2 en laissant intact l'espace axial entre les deux plateaux 11 et 21. Ainsi il est possible d'utiliser un palier 15 de taille réduite et de visser les vis 32.

Lors du mouvement relatif entre les deux masses 1,2, les ressorts 8, et donc les cassettes 10 articulées s'inclinent comme représenté dans la partie haute de la figure 2 avec un mouvement relatif entre les pièces 51 et 60 engendrant un frottement. Les ressorts 8 sont comprimés lors de ce mouvement et travaillent donc en compression.

Comme mieux visible à la figure 3, le plateau de réaction 21 est d'épaisseur réduite à sa périphérie externe pour logement de la pièce 60. Sa face avant, tournée vers le plateau 11, est donc rognée.

La périphérie externe de la pièce 60 et les rondelles 51,52,53,54 s'étendent dans l'épaisseur du plateau 61.

Les deux masses 1,2 concentriques sont donc montées mobiles l'une par rapport à l'autre à l'encontre de moyens élastiques 8 à action radiale et de moyens de frottement 50 à action axiale.

Lors de l'opération de débrayage la rondelle 53 agit à l'encontre de la force de débrayage et soulage ainsi le palier.

On notera également que deux patins de guidage 9 interviennent entre les bords latéraux du voile 3 et les bords latéraux des pièces de guidage 4,5.

Ces patins 9 comportent des bossages engagés dans des échancrures pratiquées dans les bords latéraux du voile 3. Les patins 9 coiffent la tranche du voile 3.

Ainsi un frottement supplémentaire intervient lors du mouvement relatif entre les deux masses 1,2, les patins guidant le voile 3 lors de son mouvement relatif par rapport aux pièces 4,5. Tout risque de coincement est ainsi évité.

On notera que l'insert 40,41 présente donc une zone d'enracinement 41, d'orientation transversale, noyée dans le plateau 21 et une zone de fixation 40, d'orientation axiale, permettant la création d'un dispositif de frottement ainsi que la fixation, ici de manière réglable du couvercle 26.

Grâce à l'insert 41 et à sa zone 40 on réduit l'encombrement du volant amortisseur à cet endroit, ce qui permet d'implanter le dispositif de frottement 50 sans interférence avec le carter de l'embrayage.

Dans ces figures 1 à 4, la pièce de rigidification 60 porte à sa périphérie externe les rondelles 51,52,53,54 du dispositif de frottement 50 implanté radialement entre son rebord périphérique externe d'orientation axiale et la tranche de la périphérie externe du plateau de réaction 21. Ce dispositif s'étend radialement au-dessus de la face de fixation du plateau de réaction 21 pour les garnitures de frottement du disque de friction 23.

Bien entendu on peut inverser les structures.

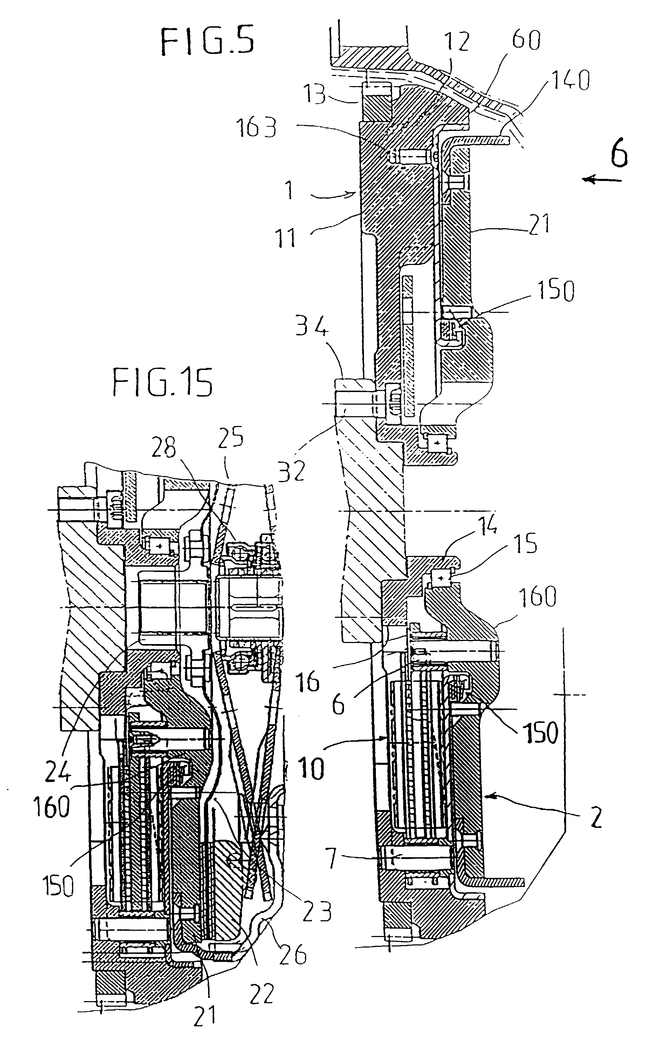

Ainsi à la figure 5 le dispositif de frottement 150 est implanté au niveau de la périphérie interne de la pièce de rigidification 60 fixée ici par des vis 163 sur la jupe 12 du plateau 11.

Pour ce faire le plateau 21 présente à sa périphérie interne une protubérance 160 dirigée axialement en direction opposée au plateau 11.

Les moyens d'articulation 6 sont montés à la faveur de cette protubérance 160.

Ces moyens d'articulation 6, comme précédemment, comportent un manchon fixé par soudage sur le voile 3 en s'étendant en direction axiale vers la protubérance 160.

Grâce à cette protubérance il est possible de rallonger ce manchon.

Ici un palier lisse est interposé entre le manchon et l'axe d'articulation proprement dit.

La pièce de rigidification 60 présente à sa périphérie externe un rebord d'orientation axiale épousant la forme de la jupe 12.

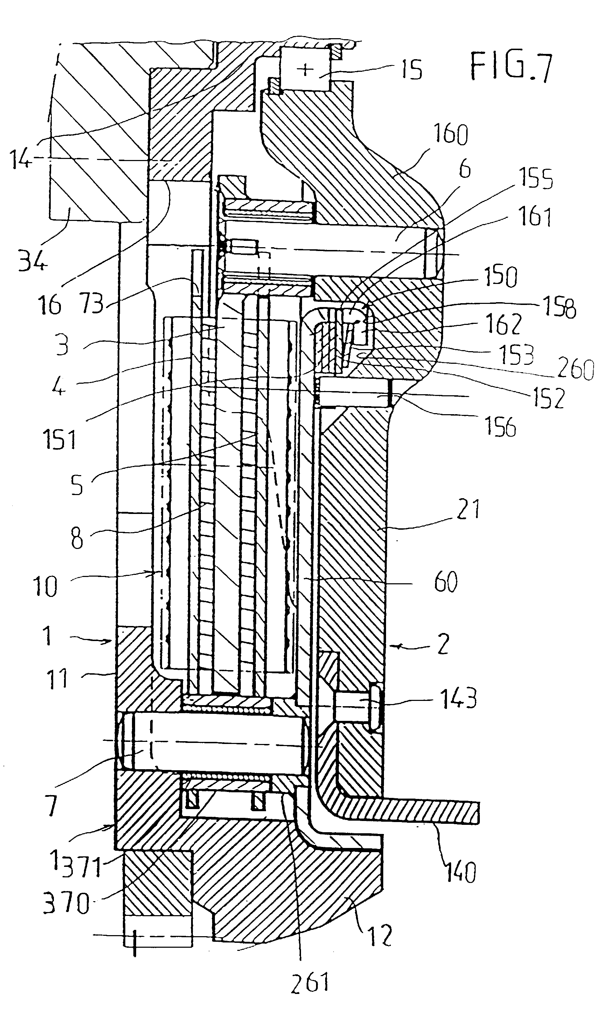

Dans les figures 3 et 7, on notera que la pièce 60 est fixée sur la face externe de la jupe 12, tournée à l'opposé du plateau 11, et que la pièce 60 épouse ladite face de la jupe, qui en variante peut être rapportée sur le plateau 11, les rivets de la figure 1 servant alors à assembler ladite jupe et ladite pièce 60 au plateau 11.

A sa périphérie interne cette pièce 60 (figure 7) présente un rebord d'orientation axiale dirigé en direction opposée au plateau 11.

Ce rebord présente des échancrures 161 formant mortaises et à son extrémité libre des pattes 162, initialement dans l'alignement de ce rebord.

Ces pattes sont destinées à être repliées ici radialement en direction opposée à l'axe de l'ensemble.

Pour ce faire, comme visible à la figure 7, de manière sombre, des saignées sont prévues pour faciliter le pliage des pattes 162. Il en est de même à la figure 3.

Entre la périphérie interne de la partie transversale de la pièce 60 et les pattes 162, on trouve successivement axialement une rondelle de frottement 151, une rondelle d'application 152 et une rondelle élastique à action axiale 153, ici une rondelle Belleville, prenant appui directement sur les pattes 162 pour action sur la rondelle d'application 152 et serrage, comme à la figure 3, de la rondelle de frottement 151 entre la rondelle d'application 152 et la pièce 60.

Cette pièce d'application 152 présente à sa périphérie interne des pattes 155 formant des tenons engagés, éventuellement à jeu circonférentiel dans les mortaises 161.

A sa périphérie externe la rondelle 151 présente des échancrures 157 propres à engrener ici à jeu avec des pions 156 portés par le plateau de réaction 21.

En variante les échancrures engrènent sans jeu avec les pions 156.

Ces pions s'étendent radialement en-dessous de la face de friction du plateau de réaction 21 pour les garnitures de frottement du disque de friction 23 du plateau de réaction 21 présentant à sa périphérie externe une pièce de fixation annulaire 140 à section en forme d'équerre fixée par des rivets 143 au plateau de réaction 21.

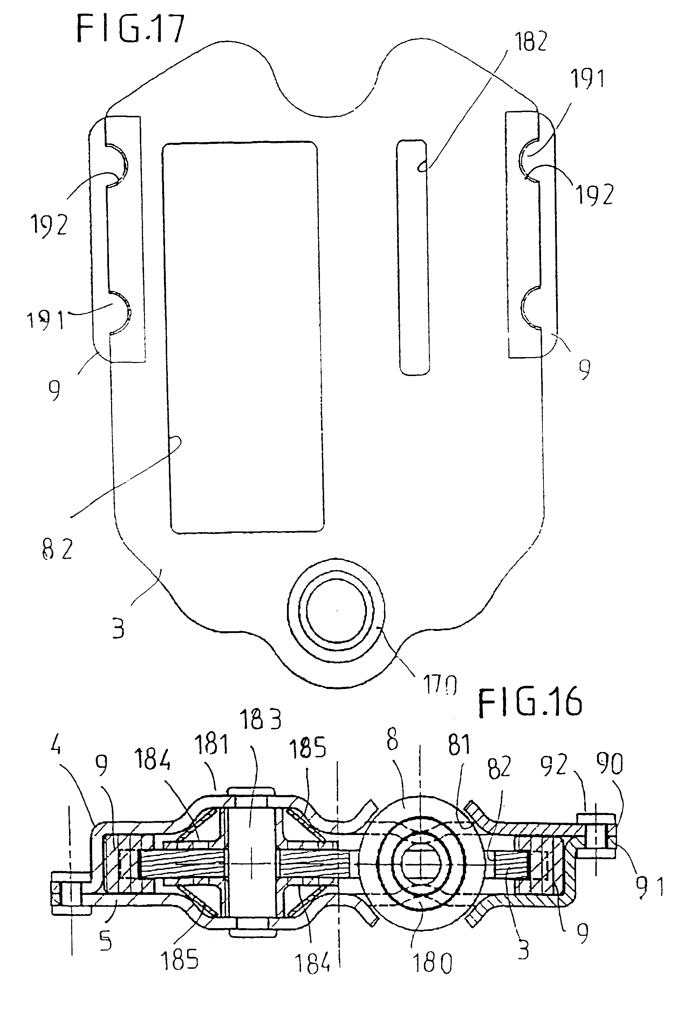

Pour ce faire la face du plateau de réaction 21, tournée vers le plateau 11, est creusée pour logement de la partie transversale de la pièce 140, dont la partie axiale 140 sert à la fixation du couvercle de la figure 1, le reste de l'embrayage n'ayant pas été représenté par simplicité. On notera néanmoins que le disque 23 est galbé pour épouser la forme de la protubérance et contourner celle-ci comme visible à la figure 15 dans laquelle on voit l'embrayage.

Le dispositif d'hystérésis 150 s'étend donc radialement en-dessous de la face de friction (figure 15) et pour ce faire le plateau de réaction 121 est creusé en 158,260 pour logement des rondelles 151,152,153 et des pattes 162.

Il est ainsi créé un évidement annulaire avec un fond 158 s'étendant globalement transversalement et un bord incliné 260 dirigé vers le plateau 11.

Intérieurement l'évidement de logement du dispositif de frottement 150 est délimité par un rebord d'orientation axiale. Cet évidement ou creusure est formé à la faveur de la protubérance 160 sur la face du plateau 21 dirigée vers le plateau 11.

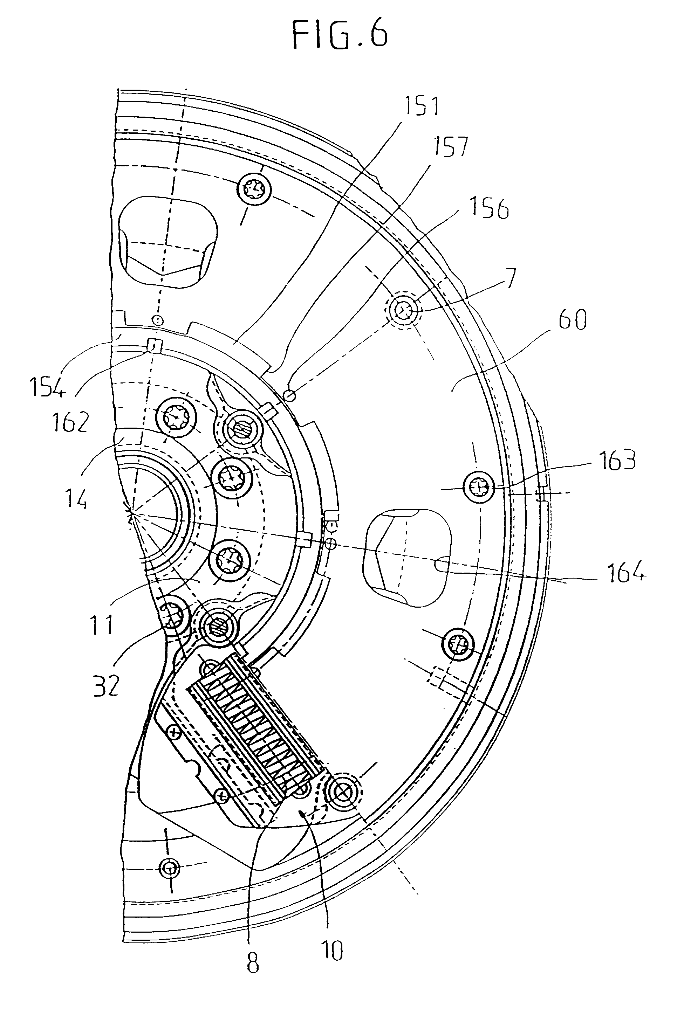

La pièce de rigidification 60 permet le vissage des vis 32 et présente des ouvertures 164 (figure 6) pour faciliter la ventilation.

On appréciera, par rapport au mode de réalisation de la figure 1, que l'on peut augmenter la taille radiale du plateau de réaction 21 et donc l'inertie.

Les moyens d'articulation 7 comprennent un axe emmanché dans le plateau 11 et dans une douille 261 rapportée par soudage sur la pièce 60.

Ces moyens d'articulation comportent par ailleurs un manchon 370 formant entretoise entre la douille 261 et le plateau 11, ce manchon 370 est monté dans des ouvertures correspondantes prévues dans les pièces de guidage 4 et 5.

Un palier lisse 371 est interposé radialement entre le manchon 370 solidaire des pièces 4 et 5.

Dans les deux cas, la pièce 60 globalement d'orientation transversale s'étend au voisinage du plateau 21 et a une double fonction à savoir, d'une part, une fonction de frottement pour le dispositif 50,150, et, d'autre part, une fonction de support pour les moyens d'articulation 7 implantés dans les deux cas à la périphérie externe de ladite pièce 60. Dans tous les cas elle rigidifie la masse 1.

Bien entendu la présente invention n'est pas limitée à l'exemple de réalisation décrit.

Ainsi dans les figures 9 et 10, les pièces de guidage 4 et 5 présentent des bords latéraux identiques 190 accolés et fixés par soudage, par points référencés en 192, des pions de centrage 193 intervenant entre les deux rebords 190.

Bien entendu ces rebords accolés peuvent être de forme semi-circulaire comme visible à la figure 11 en 290 en étant soudés comme visible en 292.

Les premiers moyens d'articulation peuvent comporter (figure 12) un axe 6 soudé en 460 sur le voile 3 et monté à articulation sur le plateau 21 à la faveur d'une paroi transversale 461 formée dans l'épaisseur du plateau 21 à la faveur de passages 462,463 communiquant prévus dans ledit plateau 21.

L'axe 6 est donc monté tourillonnant dans l'alésage de la paroi 461.

Une rondelle fendue du type circlips 464 est montée dans le passage 462 dans une rainure de l'axe 6 pour calage axial dudit axe.

Bien entendu (figure 13) le voile 3 peut ne pas être déformé à sa périphérie interne pour porter le manchon 170 entourant le roulement à aiguilles 171.

Bien entendu l'embrayage peut être du type tiré comme décrit dans le document FR-A-2 463 874 (US-A-4,362,230).

Le couvercle peut être en matière plastique renforcée par des fibres, par exemple de verre.

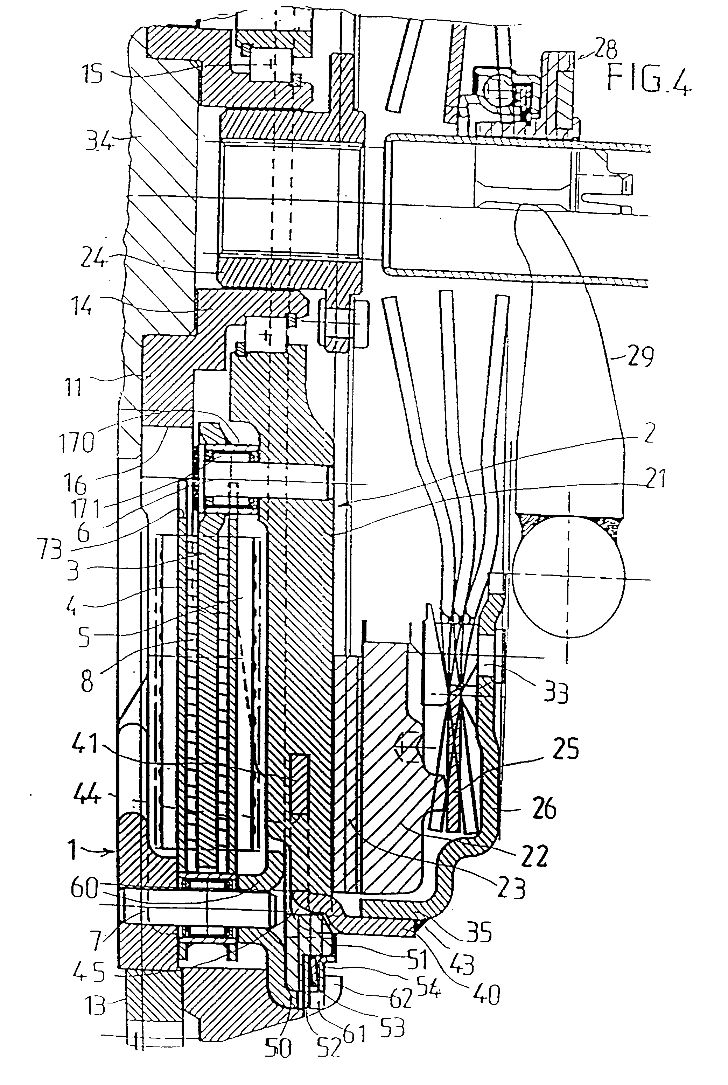

En variante les colonnettes 33 et le diaphragme 25 peuvent être montés à l'extérieur du couvercle comme à la figure 4 du document FR-A-1 524 350.

Dans ce cas les bossages, qu'offre le plateau de pression 22 pour l'appui du diaphragme 25, traversent le couvercle fixé par exemple comme à la figure 7 par soudage sur l'insert.

On appréciera que le roulement 15 est de taille réduite et qu'il s'étend en-dessous des vis 32 ce qui permet d'allonger les ressorts 8 et donc les cassettes 10.

Dans les figures illustrées, pour la position de repos du volant amortisseur, les cassettes 10 s'étendent radialement, les moyens d'articulation 6,7 étant alors alignés sur un même axe, en étant décalés radialement.

En variante pour ladite position de repos, les cassettes 10 peuvent être légèrement inclinées, les moyens d'articulation 6,7 étant alors décalés circonférentiellement et radialement.

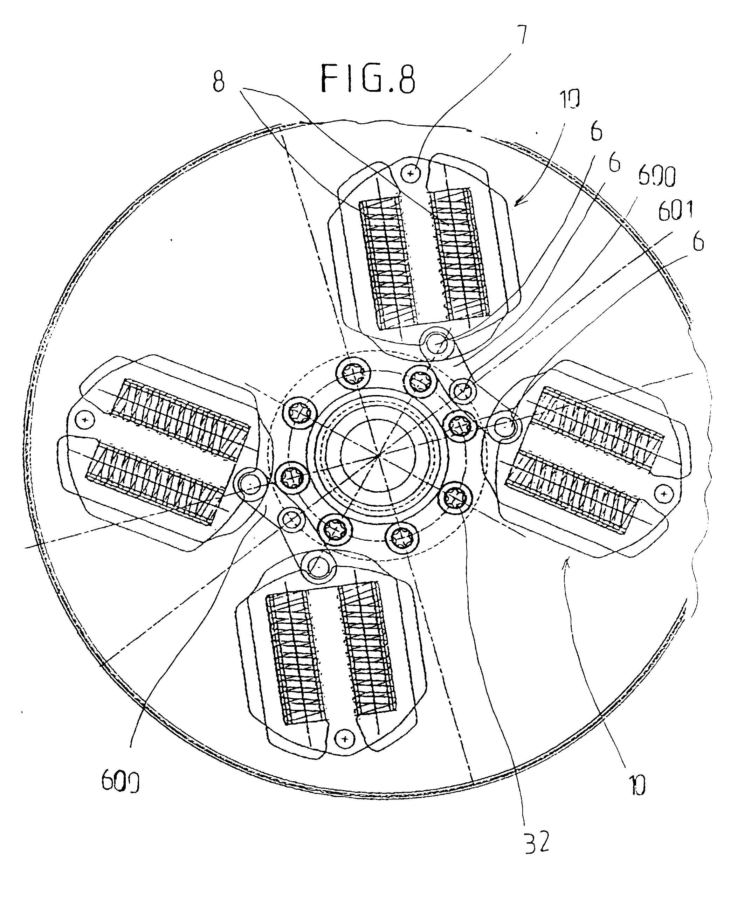

Ainsi à la figure 8 les cassettes 10 sont groupées par paire, les pièces de guidage étant articulées à leur périphérie externe sur les moyens d'articulation 7 portés par la première masse.

A leur périphérie interne, les deux voiles sont articulés sur une biellette 600 à l'aide des moyens d'articulation 6. La biellette 600 est ainsi articulée à chacune de ses extrémités sur l'un des voiles et centralement sur des moyens d'articulation 601 articulés sur le plateau de réaction 21 de la même manière que dans les figures 1 à 7.

Lors du mouvement relatif entre le voile 3 et les pièces de guidage 4,5, les ressorts sont donc admis à travailler en traction-compression.

Dans tous les cas, ces ressorts interviennent globalement radialement entre les deux masses.

En variante la biellette 600 peut être fixée directement, par exemple par soudage, sur les deux voiles 3 associés.

Bien entendu on peut inverser les structures, les pièces 4,5 étant articulées à leur périphérie interne sur le plateau de réaction 21, tandis que le voile 3 est alors articulé à sa périphérie externe sur le plateau 11 avec intervention de la pièce 60.

Le palier 15 peut être interposé radialement entre un rebord d'orientation axiale que présente alors le plateau 21 à sa périphérie interne et le moyeu 14. Ainsi la bague externe du roulement 15 est au contact du moyeu 14, tandis que la bague interne du roulement 15 est au contact du plateau 21.

Les trous fermés 44 peuvent être remplacés par des emboutis ou des crevés, ou des pattes, de préférence alternés.

Par exemple, à la figure 1, la partie d'enracinement 41 présenterait alors avantageusement une première série d'emboutis dirigés vers le plateau 11, et une seconde série d'emboutis dirigés axialement vers le plateau 22. Bien entendu on peut également prévoir des trous.

Les trous peuvent être remplacés par des évidements ouverts affectant les bords de l'insert.

Dans tous les cas, l'insert est doté de déformations, soient débouchantes (les trous, les évidements, les crevés, les pattes), soient non débouchantes (les emboutis), soient les deux à la fois pour un meilleur ancrage dans la masse du plateau de réaction.

Ainsi qu'on l'aura compris les ouvertures 16 permettent d'éviter toute interférence entre les cassettes 10 et le plateau 11.

Ces ouvertures 16 sont donc des ouvertures de dégagement permettant de réduire l'encombrement axial du volant amortisseur.

C'est pour cette raison que les ouvertures 16 ont un bord inférieur de forme circulaire et il en est de même de la forme du bord inférieur des pièces de guidage 4,5 (figure 2).

Ainsi lors du mouvement relatif entre le voile 3 et les pièces de guidage 4,5, aucune interférence n'est à craindre.

Les protubérances 71 ont une forme pointue, le plateau 11 présentant à cet endroit un bossage pour montage des moyens d'articulation 7.

Ainsi qu'on l'aura compris, dans les figures illustrées, le plateau de réaction 21 porte des pièces 40 (figure 1), 140 (figures 5) permettant la fixation du couvercle de l'embrayage axialement à distance du plateau de réaction, lesdites pièces ayant une partie s'étendant axialement à cet effet.

Ainsi contrairement à la disposition décrite dans le document FR-A-2 565 650 (US-A-5,120,276) le couvercle de l'embrayage ne présente pas de rebord radial pour sa fixation directe au plateau de réaction.

Ainsi il est possible d'implanter dans un encombrement donné les moyens de frottement à la périphérie externe du plateau de réaction (figure 1) ou d'augmenter la hauteur du plateau de réaction (figure 5), tout en ayant dans tous les cas une face de friction pour le plateau de réaction de diamètre maximal, ladite face pouvant s'étendre jusqu'à la tranche périphérique externe du plateau de réaction 21.

Bien entendu les pièces 40,140 peuvent présenter à leur extrémité libre un rebord dirigé vers l'axe de l'ensemble ou à l'opposé de l'axe de l'ensemble pour fixation du couvercle pouvant présenter un rebord périphérique de fixation comme dans le document FR-A-2 565 650, ledit couvercle étant alors plus plat.

Ce couvercle peut être simplifié et consister en une plaque rapportée par soudage sur les pièces 40,140.

En variante la fixation du couvercle peut être réalisée par sertissage ou agrafage sur l'extrémité libre des pièces 40,140.

Bien entendu à la figure 1 on peut fixer la pièce 40 comme à la figure 5 sur le plateau de réaction 21.

En variante, comme mentionné précédemment, il est possible de monter par paire les ressorts.

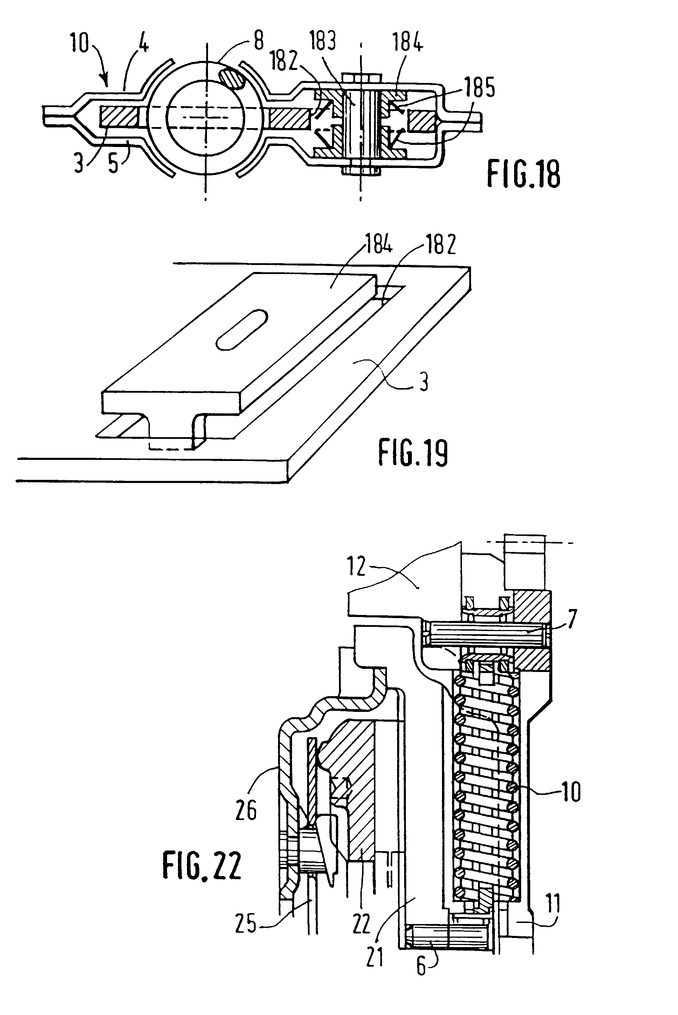

Ainsi dans les figures 16 et 17, deux ressorts 80,180 sont montés de manière concentrique à l'intérieur du logement 82 du voile et de la paire de fenêtres 81 en vis-à-vis des pièces de guidage 4,5.

Comme à la figure 3, des patins 9 sont prévus pour guider latéralement le voile lors de son mouvement relatif par rapport aux pièces de guidage.

On voit en 191 à la figure 17 les bossages desdits patins 9 coopérant avec les échancrures complémentaires 92 prévues dans le voile 3.

Ici les bossages, tout comme les échancrures 92, sont de forme semi-circulaire et deux bossages, et donc deux évidements sont prévus par patins.

Il est ainsi formé une liaison du type tenons-mortaises, les patins étant liés ou attelés par coopération de formes au voile 3.

Ces patins sont admis à frotter contre les bords 90,91 des pièces de guidage 4,5, lesdits rebords présentant des portions d'orientation axiale pour coopération avec les patins 9.

Dans cette figure 16, le voile 3 présente une échancrure 182 de guidage de forme rectangulaire allongée tout comme la fenêtre 82.

Cette échancrure 182, constituant une fenêtre, s'étend parallèlement à la fenêtre 82 en étant moins large et moins haute que celle-ci.

Les pièces de guidage présentent des zones embouties 181 en regard de la fenêtre 182.

Ces zones 181 sont saillantes vers l'extérieur et présentent un fond parallèle au voile 3 et permettant la fixation de colonnettes 183 reliant entre elles les emboutis 181 en regard l'un de l'autre.

Le fût de la colonnette 183 forme donc entretoise entre les deux zones embouties 181 et est admis à pénétrer dans l'échancrure 182 et à coulisser le long de celle-ci. L'échancrure 182 guide donc les colonnettes.

Le fût de la colonnette sert au montage de pièces d'application et de frottement 184 propres à venir en contact avec le voile 3. Ces pièces d'application présentent centralement un manchon entourant le fût de la colonnette 183. Ici deux pièces d'application 184 sont montées de part et d'autre du voile en étant soumises chacune à l'action d'une rondelle élastique à action axiale 185, ici une rondelle Belleville, en variante une rondelle ondulée.

Chaque rondelle 185 prend appui sur la pièce d'application concernée et sur le fond de la zone emboutie 181 en entourant la zone centrale tubulaire de la pièce d'application 184 concernée.

Ainsi les pièces d'application 184 sont sollicitées par les rondelles élastiques 185, lesdites rondelles 185 prenant appui sur le fond des emboutis 181 pour serrage des pièces d'application 184 au contact du voile 3. Ces pièces 184 sont mobiles en étant guidées par les colonnettes à la faveur de leur manchon central.

Ainsi par rapport à la disposition de la figure 3 on a supprimé l'un des logements 81 pour implanter des moyens de frottement intervenant entre le voile et les pièces de guidage.

Ainsi des moyens de frottement sont montés au sein de la cassette. Avantageusement les patins 9 sont à faible coefficient de frottement, mais cela dépend des applications car les patins participent au frottement.

Bien entendu on peut inverser les structures.

Ainsi les pièces d'application 184 peuvent présenter à chacune de leur extrémité (figures 18,19) une patte venant en prise avec le bord latéral concerné de l'échancrure 182.

Dans ce cas les pièces présentent une ouverture oblongue pour passage du fût des colonnettes 183. Les rondelles élastiques 185 sont intercalées entre les deux pièces d'application pour les solliciter au contact des emboutis 181 des pièces de guidage.

Bien entendu on peut disposer de part et d'autre des moyens élastiques 80,180 deux dispositifs de frottement à échancrure 182.

Il est possible de réaliser toutes les combinaisons possibles.

Les pièces de guidage 4,5 des cassettes peuvent être fixées latéralement l'une à l'autre à l'aide de colonnettes.

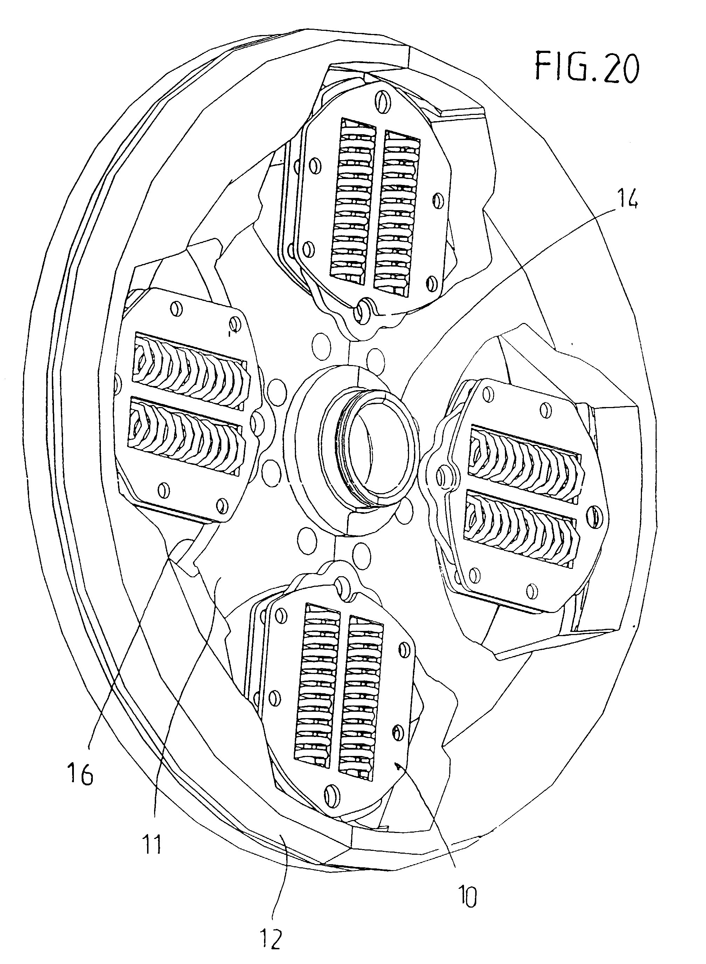

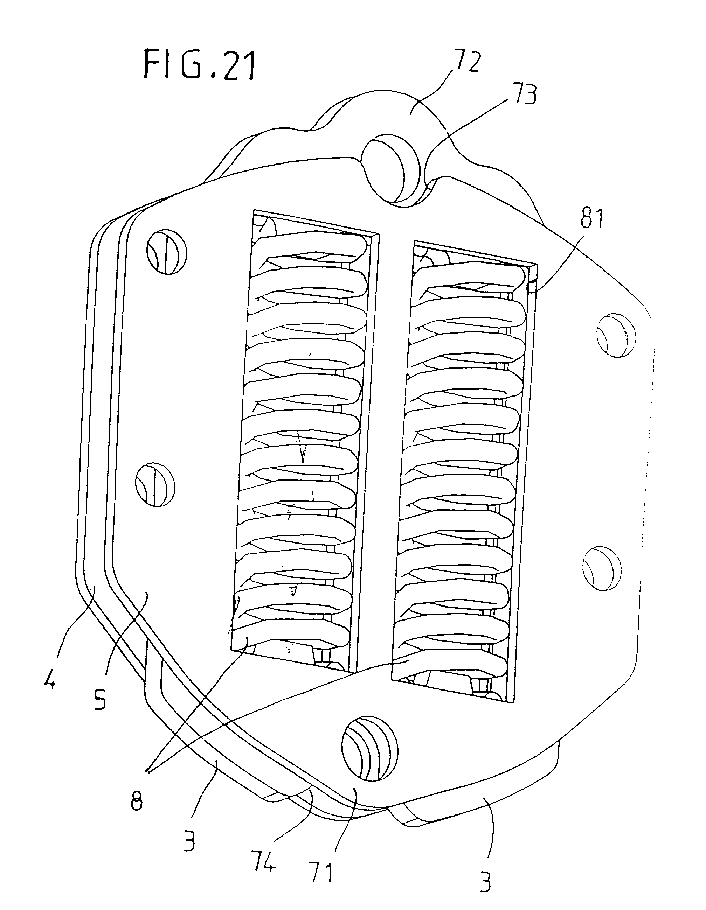

Ainsi les bords latéraux des pièces de guidage 4,5 s'étendent parallèlement l'un à l'autre (figures 20 et 21) et présentent des trous pour le passage des colonnettes.

Dans ces figures les pièces de guidage 4,5 sont plates en étant dépourvues de lèvres.

Bien entendu (figure 22) la jupe 12 peut être rapportée sur le plateau de réaction à l'aide par exemple de rivets (non visibles) sur le plateau 11, à la périphérie externe de celui-ci, pour porter les moyens d'articulation. Dans cette figure le couvercle 26 est classique et présente un rebord radial de fixation.

On peut inverser les structures en ce qui concerne les patins de guidage 9, les pièces de guidage présentant des tenons pour venir en prise de manière complémentaire avec des échancrures formées dans les patins.

Enfin les évidements de dégagement 73,74 pour les moyens d'articulation 6,7 peuvent avoir une forme autre que semi-circulaire.

## Revendications

1. Volant amortisseur, notamment pour véhicule automobile, comportant deux masses coaxiales (1,2) montées mobiles l'une par rapport à l'autre à l'encontre d'un dispositif élastique d'amortissement (10) comportant au moins un organe élastique (8) intervenant globalement radialement entre lesdites masses et monté à articulation sur l'une et l'autre de celles-ci, ledit organe élastique (8) étant monté dans une cassette articulée (10), ladite cassette (10) comportant pour le montage d'au moins deux organes élastiques (8) parallèlement l'un à l'autre, d'une part, un voile (3) doté d'au moins deux premiers logements (82) parallèles pour montage desdits organes élastiques (8), et, d'autre part, deux pièces de guidage (4,5) disposées axialement de part et d'autre du voile (3) et présentant, en regard de chaque premier logement (82), chacune un second logement (81) pour montage desdits organes élastiques (8), lesdits seconds logements (81) étant parallèles entre eux, les pièces de guidage (4,5) étant fixées l'une à l'autre, le voile (3) et les pièces de guidage (4,5) étant montées tête-bêche, et ledit voile (3) présentant à l'une de ses périphérie interne et externe une première protubérance (72) pour montage de premiers moyens d'articulation (6) sur une première (2) desdites masses, tandis que les pièces de guidage (4,5) présentent chacune à l'une de leur périphérie externe et interne une seconde protubérance (71), en regard l'une avec l'autre, pour montage de seconds moyens d'articulation (7) sur une seconde (1) desdites masses, lesdites secondes protubérances (71) et première protubérances (72) étant décalées radialement l'une par rapport à l'autre.

2. Volant selon la revendication 1, caractérisé en ce que les premiers (82) et les seconds logements (81) consistent en des fenêtres globalement d'orientation radiale.

3. Volant selon la revendication 1, caractérisé en ce que les premiers logements (82) consistent, en des échancrures globalement d'orientation radiale ouverte radialement du côté opposé à la première protubérance (72).

4. Volant selon l'une quelconque des revendications précédentes, caractérisé en ce que les seconds logements consistent en des emboutis.

5. Volant selon la revendication 1, caractérisé en ce que les pièces de guidage (4,5) sont fixées latéralement l'une à l'autre.

6. Volant selon la revendication 5, caractérisé en ce que les pièces de guidage (4,5) sont fixées latéralement l'une à l'autre à la faveur de rebords latéraux (90,91-190-290) qu'elles présentent à cet effet.

7. Volant selon selon l'une quelconque des revendications précédentes, caractérisé en ce que les pièces de guidage (4,5) sont fixées latéralement l'une à l'autre par soudage.

8. Volant selon l'une quelconque des revendications précédentes, caractérisé en ce que les pièces de guidage (4,5) sont fixées latéralement l'une à l'autre par rivetage.

9. Volant selon l'une quelconque des revendications présédentes, caractérisé en ce que les pièces de guidage (4,5) sont fixées latéralement l'une à l'autre par rivetage et soudage.

10. Volant selon l'une quelconque des revendications précédentes, caractérisé en ce que les pièces de guidage (4,5) présentent chacune au niveau de la première protubérance (72) un second évidement (73) pour le passage des premiers moyens d'articulation (6), tandis que le voile (3) présente au niveau des secondes protubérances (71) un premier évidement (74) pour passage des seconds moyens d'articulation (7).

11. Volant selon l'une quelconque des revendications précédentes, caractérisé en ce que des moyens de frottement sont montés au sein de la cassette (10) pour intervention entre le voile (3) et les pièces de guidage (4,5).

12. Volant selon la revendication 11, caractérisé en ce que des patins de frottement (9) interviennent latéralement entre les pièces de guidage (4,5) et le voile (3).

13. Volant selon la revendication 12, caractérisé en ce que l'un des éléments patins (9) - voile (3) présente un tenon, tandis que l'autre des éléments voile (3) - patins (9) présente une mortaise pour liaison du patin (9) avec le voile par coopération de formes.

## Patentansprüche

1. Dämpfungsschwungrad, insbesondere für Kraftfahrzeuge, umfassend zwei koaxiale Massen (1, 2), die im Verhältnis zueinander beweglich entgegen einer elastischen Dämpfungsvorrichtung (10) gelagert sind, die wenigstens ein elastisches Organ (8) umfaßt, das insgesamt radial zwischen den besagten Massen zum Einsatz kommt und gelenkig an der einen und der anderen von ihnen gelagert ist, wobei das besagte elastische Organ (8) in einer angelenkten Kassette (10) gelagert ist, wobei die besagte Kassette (10) für die Lagerung von wenigstens zwei elastischen Organen (8) parallel zueinander einerseits eine Zwischenscheibe (3), die mit wenigstens zwei parallelen ersten Aufnahmen (82) für die Lagerung der besagten elastischen Organe (8) versehen ist, und andererseits zwei Führungsteile (4, 5) umfaßt, die axial beiderseits der Zwischenscheibe (3) angeordnet sind und gegenüber jeder ersten Aufnahme (82) jeweils eine zweite Aufnahme (81) für die Lagerung der besagten elastischen Organe (8) aufweisen, wobei die besagten zweiten Aufnahmen (81) parallel zueinander verlaufen, wobei die Führungsteile (4, 5) aneinander befestigt sind, wobei die Zwischenscheibe (3) und die Führungsteile (4, 5) entgegengesetzt angebracht sind und wobei die besagte Zwischenscheibe (3) an einem ihrer inneren und äußeren Umfänge eine erste Ausstülpung (72) für die Anbringung von ersten Anlenkmitteln (6) zur Anlenkung an einer ersten (2) der besagten Massen aufweist, während die Führungsteile (4, 5) jeweils an einem ihrer äußeren und inneren Umfänge, einander gegenüberliegend, eine zweite Ausstülpung (71) für die Anbringung von zweiten Anlenkmitteln (7) zur Anlenkung an einer zweiten (1) der besagten Massen aufweisen, wobei die besagten zweiten Ausstülpungen (71) und ersten Ausstülpungen (72) im Verhältnis zueinander radial versetzt sind.

2. Schwungrad nach Anspruch 1, **dadurch gekennzeichnet,** daß die ersten (82) und die zweiten Aufnahmen (81) aus insgesamt radial ausgerichteten Fenstern bestehen.

3. Schwungrad nach Anspruch 1, **dadurch gekennzeichnet**, daß die ersten Aufnahmen (82) aus insgesamt radial ausgerichteten Aussparungen bestehen, die radial auf der der ersten Ausstülpung (72) abgewandten Seite offen sind.

4. Schwungrad nach einem der vorangehenden Ansprüche, **dadurch gekennzeichnet**, daß die zweiten Aufnahmen aus Vertiefungen bestehen.

5. Schwungrad nach Anspruch 1, **dadurch gekennzeichnet**, daß die Führungsteile (4, 5) seitlich aneinander befestigt sind.

6. Schwungrad nach Anspruch 5, **dadurch gekennzeichnet**, daß die Führungsteile (4, 5) anhand von seitlichen Randleisten (90, 91-190-290), die sie dazu aufweisen, seitlich aneinander befestigt sind.

7. Schwungrad nach einem der vorangehenden Ansprüche, **dadurch gekennzeichnet**, daß die Führungsteile (4, 5) durch Schweißen seitlich aneinander befestigt sind.

8. Schwungrad nach einem der vorangehenden Ansprüche, **dadurch gekennzeichnet**, daß die Führungsteile (4, 5) durch Aufnieten seitlich aneinander befestigt sind.

9. Schwungrad nach einem der vorangehenden Ansprüche, **dadurch gekennzeichnet**, daß die Führungsteile (4, 5) durch Aufnieten und Schweißen seitlich aneinander befestigt sind.

10. Schwungrad nach einem der vorangehenden Ansprüche, **dadurch gekennzeichnet**, daß die Führungsteile (4, 5) jeweils in Höhe der ersten Ausstülpung (72) eine zweite Ausnehmung (73) für den Durchgang der ersten Anlenkmittel (6) aufweisen, während die Zwischenscheibe (3) in Höhe der zweiten Ausstülpungen (71) eine erste Ausnehmung (74) für den Durchgang der zweiten Anlenkmittel (7) aufweist.

11. Schwungrad nach einem der vorangehenden Ansprüche, **dadurch gekennzeichnet**, daß Reibungsmittel im Innern der Kassette (10) gelagert sind, um zwischen der Zwischenscheibe (3) und den Führungsteilen (4, 5) wirksam zu werden.

12. Schwungrad nach Anspruch 11, **dadurch gekennzeichnet**, daß Reibsegmente (9) seitlich zwischen den Führungsteilen (4, 5) und der Zwischenscheibe (3) zum Einsatz kommen.

13. Schwungrad nach Anspruch 12, **dadurch gekennzeichnet,** daß eines der Elemente Reibsegmente (9) - Zwischenscheibe (3) einen Zapfen aufweist, während das andere der Elemente Zwischenscheibe (3) - Reibsegmente (9) ein Zapfenloch für die Verbindung des Reibsegments (9) mit der Zwischenscheibe durch formschlüssiges Zusammenwirken aufweist.

## Claims

1. A damped flywheel, especially for a motor vehicle, comprising two coaxial masses (1, 2) mounted for movement of one with respect to the other against the action of a resilient damping device (10), which comprises at least one resilient member (8) working generally radially between the said masses and articulated on both of the latter, the said resilient member (8) being mounted in an articulated cassette (10), the said cassette (10) comprising, for mounting at least two resilient members (8) parallel to each other, firstly, a damper plate (3) having at least two parallel first housings (82) for mounting the said resilient members (8), and secondly, two guide members (4, 5) which are disposed axially on either side of the damper plate (3), and each of which has, in facing relationship to each first housing (82), a second housing (81) for mounting the said resilient members (8), the said second housings (81) being parallel to each other, the guide members (4, 5) being fixed to each other, the damper plate (3) and the guide members (4, 5) being mounted head to toe, and the said damper plate (3) having at one of its inner and outer peripheries a first projecting element (72) for mounting first articulating means (96) on a first one (2) of the said masses, while each of the guide members (4, 5) has at one of its outer and inner peripheries a second projecting element (71), one of which is in facing relationship with the other, for mounting second articulating means (7) on a second one (1) of the said masses, the said second projecting elements (71) and first projecting elements (72) being offset radially from each other.

2. A flywheel according to Claim 1, characterised in that the first housings (82) and the second housings (81) consist of generally radially oriented windows.

3. A flywheel according to Claim 1, characterised in that the first housings (82) consist of generally radially oriented slots which are open radially on the side opposed to the first projecting element (72).

4. A flywheel according to any one of the preceding Claims, characterised in that the second housings consist of press formed portions.

5. A flywheel according to Claim 1, characterised in that the guide members (4, 5) are fixed laterally to each other.

6. A flywheel according to Claim 5, characterised in that the guide members (4, 5) are fixed laterally to each other by means of lateral flanges (90, 91 - 190 - 290) with which they are provided for that purpose.

7. A flywheel according to any one of the preceding Claims, characterised in that the guide members (4, 5) are fixed laterally to each other by welding.

8. A flywheel according to any one of the preceding Claims, characterised in that the guide members (4, 5) are fixed laterally to each other by riveting.

9. A flywheel according to any one of the preceding Claims, characterised in that the guide members (4, 5) are fixed laterally to each other by riveting and welding.

10. A flywheel according to any one of the preceding Claims, characterised in that each guide member (4, 5) has, in the region of the first projecting element (72), a second aperture (73) for accommodation of the first articulating means (6), while the damper plate (3) has, in the region of the second projecting elements (71), a first aperture (74) for accommodation of the second articulating means (7).

11. A flywheel according to any one of the preceding Claims, characterised in that friction means are mounted inside the cassette (10), so as to work between the damper plate (3) and the guide members (4, 5).

12. A flywheel according to Claim 11, characterised in that friction pads (9) are interposed laterally between the guide members (4, 5) and the damper plate (3).

13. A flywheel according to Claim 12, characterised in that one of the elements consisting of the pads (9) and the damper plate (3) has a tenon, while the other one of the elements consisting of the damper plate (3) and the pads (9) has a mortice for coupling the pad (9) with the damper plate in mating cooperation.
